# EUROPÄISCHE PATENTSCHRIFT

(11) **EP 3 521 215 B1**
(45) Veröffentlichungstag und Bekanntmachung des Hinweises auf die Patenterteilung: **20.04.2022**
(21) Anmeldenummer: 19155211.6
(22) Anmeldetag: 04.02.2019
(51) Int. Cl.: B65G 27/02, B65G 27/04, B65G 27/24, B65G 27/30

(54) **SCHWINGFÖRDERER**
VIBRATORY CONVEYOR
TRANSPORTEUR À VIBRATIONS

(30) Priorität: 06.02.2018 DE 102018102554
(43) Veröffentlichungstag der Anmeldung: 07.08.2019
(73) Patentinhaber: Afag Holding AG, 6144 Zell (CH)
(72) Erfinder: Bäumler, Martin, 92702 Kohlberg (DE)
(74) Vertreter: Lindner Blaumeier Patent- und Rechtsanwälte

(56) Entgegenhaltungen:
- WO-A1-93/07971
- DE-B- 1 267 602
- FR-A1- 2 896 238
- GB-A- 798 729
- US-A- 2 836 298
- US-A- 4 272 366

## Beschreibung

Die Erfindung betrifft einen Schwingförderer mit einer durch wenigstens eine Antriebsvorrichtung zu einer Schwingung anregbaren Fördervorrichtung, wobei durch die Schwingung der Fördervorrichtung durch eine Förderoberfläche der Fördervorrichtung gelagerte Objekte entlang einem Förderpfad förderbar sind.

In Schwingförderern wird durch eine Antriebsvorrichtung, beispielsweise durch das Zusammenwirken eines Jochs mit einem Magneten, eine Schwingschiene, ein Schwingtopf oder Ähnliches in Schwingungen versetzt. Bei Schwingförderern, die auf einem Mikrowurf basieren, werden relativ niedrige Anregungsfrequenzen, beispielsweise die Frequenz einer Netzspannung oder das Doppelte dieser Frequenz, genutzt, um entsprechende Schwingungsfrequenzen anzuregen. Durch den Aufbau bzw. die Ansteuerung des Schwingförderers wird ein asymmetrisches Schwingverhalten erreicht, womit bei einem Betrieb des Schwingförderers auf der Förderoberfläche der Fördervorrichtung gelagerte Objekte entlang einem Förderpfad gefördert werden. Der Förderpfad kann hierbei linear sein, beispielsweise im Falle einer Schwingschiene, oder wendelförmig, beispielsweise bei einem Wendelförderer. Ein wichtiger Einsatzbereich von Schwingförderern ist die Förderung, Vereinzelung und Ausrichtung von Bauteilen.

Die Nutzung von Schwingförderern kann problematisch sein, wenn Teile gefördert werden sollen, an denen Öl haftet bzw. die mit Silikon behandelt wurden. Aufgrund der an den Teilen anhaftenden Flüssigkeitsschicht können diese an der Schiene anhaften und unter Umständen nicht mehr oder nicht mehr zuverlässig gefördert werden. Dieses Problem kann dadurch behoben werden, dass die öl- bzw. silikonbehafteten Teile auf einem saugfähigen Fasermaterial geführt werden, das überschüssiges Öl bzw. Silikon aufsaugt und somit die Bildung von Flüssigkeitsschichten, die zu einem Haften der Teile führen, verhindern kann. Nachteilig ist hierbei jedoch, dass diese Materialien, wenn sie vollgesaugt sind, aufwändig gereinigt bzw. ausgetauscht werden müssen. Zudem können hervorstehende Fasern den Transport der Teile blockieren und hierdurch Störungen verursachen.

Das Dokument US 2,836,298 A offenbart einen Schwingförderer zum Transportieren von Sand und Kies gemäss dem Oberbegriff des Anspruchs 1, dessen Förderoberfläche ein Gitter aufweist.

Der Erfindung liegt somit die Aufgabe zugrunde, einen Schwingförderer anzugeben, der demgegenüber, insbesondere bezüglich des Transports von öligen oder silikonbehafteten Teilen, verbessert ist.

Die Aufgabe wird gelöst durch einen Schwingförderer nach Anspruch 1. Weitere vorteilhafte Ausführungen ergeben sich aus den Unteransprüchen.

Erfindungsgemäß wird vorgeschlagen, statt einer Fördervorrichtung, also beispielsweise einer Förderschiene oder einem Fördertopf, mit ebener Förderoberfläche eine Fördervorrichtung zu nutzen, die Durchbrechungen bzw. Erhebungen aufweist. Die zu fördernden Objekte werden somit nicht durch eine ebene, geschlossene Fläche gelagert, sondern sie liegen ausschließlich oder zumindest primär auf den Erhebungen bzw. den Tragabschnitten auf. Dies kann es ermöglichen, dass zwischen den Tragabschnitten oder Erhebungen eine auf die Förderoberfläche transportierte Flüssigkeit, insbesondere Öl bzw. Silikon, das an den Objekten anhaftet, abführbar ist. Hierdurch kann verhindert werden, dass sich großflächige Flüssigkeitsfilme bilden, die den Transport der Objekte verhindern oder stören könnten. Dies ermöglicht es insbesondere, auf die Nutzung von saugfähigem Material an der Oberfläche des Förderpfads zu verzichten, da Öl, Silikon oder andere Flüssigkeiten anderweitig abgeführt werden können. Insbesondere, wenn der Schwingförderer zur Förderung von Bauteilen oder Ähnlichem dient, sind typischerweise die Abmessungen der zu fördernden Objekte bekannt. Die Abstände der Erhebungen bzw. der Tragabschnitte können dann so gewählt werden, dass sie deutlich kleiner sind als die Objektabmessungen, jedoch dennoch eine problemlose Abscheidung von problematischen Flüssigkeiten, also beispielsweise Silikon oder Öl, ermöglichen. Die Abstände zwischen den Erhebungen bzw. Tragabschnitten sind makroskopisch und können insbesondere größer als 0,5 mm oder größer als 1 mm sein. Beispielsweise können Abstände von mehreren Millimetern vorgesehen sein. Hierbei können die gewählten Abstände wie obig erläutert von den zu fördernden Objekten abhängen. Für eine Abführung von Flüssigkeiten mit hohen Oberflächenspannungen, also insbesondere bei einer Abführung von Öl oder Silikon, ist eine Nutzung von relativ großen Abständen vorteilhaft, da die Flüssigkeit ansonsten aufgrund ihrer Oberflächenspannung die Abstände überspannen kann. Zudem werden die Abstände vorzugsweise so gewählt, dass sie wenigstens um den Faktor 5 oder 10 kleiner sind als die Abmessung des Objekts in die entsprechende Raumrichtung, um eine stabile Führung des Objekts zu ermöglichen.

Die Fördervorrichtung ist oder umfasst ein Gitter, das die Förderoberfläche bildet. Das Gitter kann beispielsweise durch ein Drahtgewebe oder durch ein Lochblech gebildet werden. Die Nutzung eines solchen Gitters ermöglicht eine relativ einfache Herstellung einer Fördervorrichtung mit beabstandeten Durchbrechungen. Beispielsweise kann das Gitter unmittelbar in die gewünschte Form gebogen werden und selbst die Fördervorrichtung bilden oder es kann auf einen Tragkörper der Vorrichtung aufgebracht und dort befestigt werden.

Zusätzlich wäre es beispielsweise möglich, dass die Fördervorrichtung eine unebene Oberfläche aufweist, die die Erhebungen ausbildet. Beispielsweise kann die Fördervorrichtung eine Förderoberfläche mit Noppenprofil aufweisen.

Das Gitter bzw. zumindest die die Förderoberfläche bildenden Abschnitte der Fördervorrichtung können aus Metall, beispielsweise Edelstahl, oder aus Kunststoff gebildet sein. Das Gitter kann durch ein insbesondere grobmaschiges Metall- oder Kunststoffgewebe gebildet sein. Hierbei können die Abstände der Drähte größer als der Drahtdurchmesser sein. Ist die gesamte Fördervorrichtung aus dem Gitter geformt, ist das Gitter beispielsweise in Form einer linearen Schiene oder eines Fördertopfes gebogen, so kann die Flüssigkeit boden- und/oder randseitig frei aus der Fördervorrichtung austreten. Hierbei kann es vorteilhaft sein, einen Auffangbehälter, z. B. ein Auffangbecken oder eine Ablaufrinne, vorzusehen, bezüglich dem die Fördervorrichtung schwingt, um abgeführte Flüssigkeit aufzufangen. Beispielsweise kann ein Auffangbehälter durch ein Gegengewicht des Schwingförderers gebildet werden, das entgegen der Fördervorrichtung schwingt oder er kann im Wesentlichen feststehen.

Die Fördervorrichtung kann einen Tragkörper umfassen, der eine sich entlang des Förderpfades erstreckende Schiene ausbildet, wobei das Gitter an dem Tragkörper befestigt ist und sich entlang oder oberhalb eines Schienenbodens der Schiene erstreckt. Insbesondere kann das Gitter den Schienenboden vollständig bedecken. Der Förderpfad kann linear, beispielsweise im Fall einer Schwingschiene, oder wendelförmig, beispielsweise im Falle eines Wendelförderers mit einem Fördertopf, sein. Der Tragkörper kann zur mechanischen Stabilisierung der Fördervorrichtung dienen und/oder dazu, durch das Gitter austretende Flüssigkeiten aufzufangen und abzuführen.

Die Schiene kann einen Boden und wenigstens eine, vorzugsweise zwei, Seitenwände aufweisen. Im Falle eines Wendelförderers kann der Boden der Schiene zumindest abschnittsweise gegenüber der Horizontalen geneigt sein. Das Gitter kann in die Schiene eingelegt und dort befestigt sein. Es kann sich ausschließlich bodenseitig erstrecken. Es kann jedoch vorteilhaft sein, wenn sich das Gitter entlang wenigstens einer Seitenwand der Schiene erstreckt. Hierdurch kann die Bildung von Flüssigkeitsfilmen an der Seitenwand unterdrückt werden, an denen anderenfalls das Objekt anhaften könnte.

Das Gitter bildet einen sich entlang des Förderpfades erstreckenden Bodenabschnitt und wenigstens einen gewinkelt zu dem Bodenabschnitt stehenden Wandabschnitt zur Führung der Objekte entlang dem Förderpfad. Vorzugsweise sind beidseitig des Förderpfads Wandabschnitte zur Führung des Objekts vorgesehen. Die Wandabschnitte können mit den Bodenabschnitten einen Winkel von wenigstens 60° einschließen und vorzugsweise im Wesentlichen senkrecht auf dem Bodenabschnitt stehen. Der Bodenabschnitt und der Wandabschnitt oder die Wandabschnitte können vorzugsweise durch ein gemeinsames Gitter, also beispielsweise durch ein gemeinsames Drahtgeflecht oder Lochblech, gebildet werden, das entsprechend gebogen ist.

An der von dem Bodenabschnitt abgewandten Seite des Wandabschnitts kann ein gewinkelt zu dem Wandabschnitt verlaufender Auflageabschnitt angeordnet sein, der auf einer Auflagefläche des Tragkörpers aufliegt. Insbesondere können beidseitig des Förderpfades entsprechende Auflageabschnitte vorgesehen sein, die beispielsweise flügelartig auf entsprechenden Auflageflächen aufliegen. Über die Auflageabschnitte und Wandabschnitte kann erreicht werden, dass der Bodenabschnitt oberhalb des Schienenbodens und beabstandet von diesem gehaltert wird. Hierdurch kann zwischen dem Schienenboden und dem Bodenabschnitt ein Hohlraum gebildet werden, der insbesondere zur Sammlung bzw. zur Abführung von Flüssigkeit dienen kann.

Die Förderoberfläche kann einen Bodenabschnitt zum Tragen der Objekte und wenigstens einen Wandabschnitt zur Führung der Objekte entlang des Förderpfades umfassen, wobei sowohl der Bodenabschnitt als auch der Wandabschnitt durch die Erhebungen und/oder Tragabschnitte der Fördervorrichtung gebildet sind. Dies kann wie obig erläutert durch Nutzung eines entsprechend gebogenen Gitters erreicht werden. Alternativ können beispielsweise Noppen oder andere Vorsprünge sowohl an der Seitenwand als auch an dem Schienenboden vorgesehen sein.

Die Erhebungen und/oder Tragabschnitte können zumindest in eine Richtung wenigstens 0,5 mm, insbesondere wenigstens 1 mm oder 2 mm, voneinander beabstandet sein. Durch Nutzung von ausreichenden Abständen zwischen den Erhebungen bzw. Tragabschnitten können auch hochviskose Flüssigkeiten wie beispielsweise Öl oder Silikon zwischen den Erhebungen bzw. Tragabschnitten abgeführt werden.

Die Erhebungen und/oder die Tragabschnitte können aus einem flüssigkeitsabweisenden Material gebildet sein. Insbesondere kann das Gitter bzw. die gesamte Fördervorrichtung aus einem flüssigkeitsabweisenden Material gebildet sein. Unter einem flüssigkeitsabweisenden Material ist insbesondere ein Material zu verstehen, das Öl bzw. Silikon nicht aufsaugt. Insbesondere kann auf die Nutzung von Fasermaterialien verzichtet werden. Hierdurch kann verhindert werden, dass sich das Material während der Nutzung des Schwingförderers mit Flüssigkeit vollsaugt, wodurch die Fördereigenschaften des Schwingförderers verändert werden könnten.

Die Fördervorrichtung kann insbesondere als Schwingschiene oder als Fördertopf ausgebildet sein. Der Schwingförderer kann insbesondere ein Linearförderer oder ein Wendelförderer sein.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel eines erfindungsgemäßen Schwingförderers,
- Fig. 2: eine geschnittene Detailansicht der Fördervorrichtung des in Fig. 1 gezeigten Schwingförderers,
- Fig. 3 - 5: Detailansichten der jeweiligen Fördervorrichtungen weiterer Ausführungsbeispiele eines erfindungsgemäßen Schwingförderers, und
- Fig. 6: ein Ausführungsbeispiel eines weiteren erfindungsgemäßen Schwingförderers.

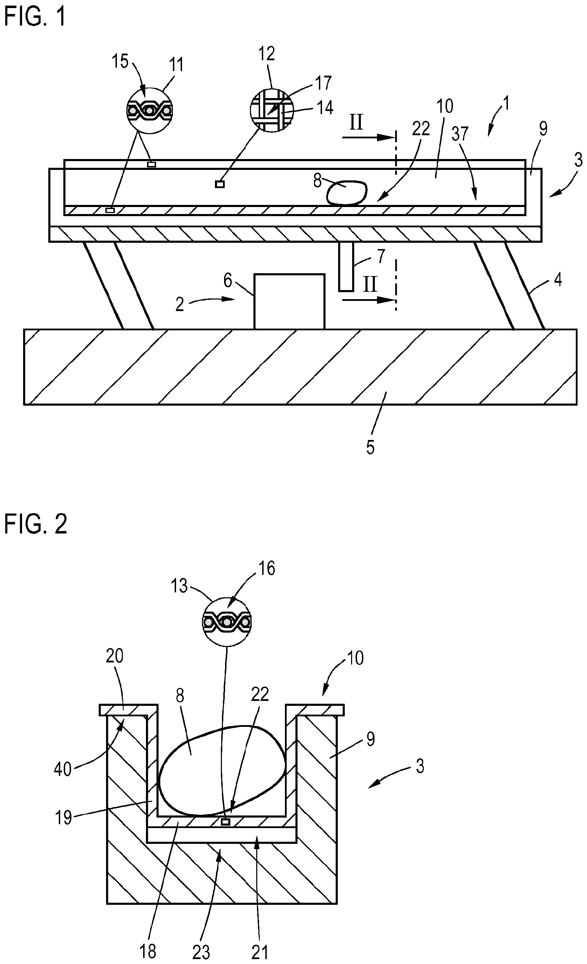

Fig. 1 zeigt einen Schwingförderer mit einer durch eine Antriebsvorrichtung 2 zu einer Schwingung anregbaren Fördervorrichtung 3. Eine geschnittene Detailansicht der Fördervorrichtung 3 entlang der Linie II - II ist in Fig. 2 dargestellt. Als Fördervorrichtung 3 wird im gezeigten Ausführungsbeispiel eine Schwingschiene genutzt, die über Blattfederpakete 4 an einer Basis 5 gelagert ist. Die Antriebsvorrichtung 2 wird durch einen Elektromagneten 6 gebildet, der durch eine nicht gezeigte Steuereinrichtung pulsartig bestromt werden kann. Über eine Bestromung des Elektromagneten 6 wird das Joch 7, das an der Schwingschiene befestigt ist, angezogen. Durch diesen Antrieb und die Lagerung über die Blattfederpakete 4 erfolgt eine Schwingung der Schwingschiene, wobei die Schwingschiene in horizontaler Richtung asymmetrisch beschleunigt wird, wodurch ein durch die Schwingschiene geführtes Objekt 8 horizontal entlang der Schwingschiene gefördert wird.

Übliche Schwingschienen nutzen glatte Förderoberflächen, auf denen die Objekte 8 gelagert sind. Wird durch die Objekte jedoch Fluid in die Förderschiene eingebracht, beispielsweise an den Objekten anhaftendes Öl oder Silikon, so kann dies zu einer Benetzung der Förderoberfläche führen, wodurch die Förderung der Objekte 8 gestört oder verhindert werden kann.

Um dem entgegenzuwirken, wird in dem Schwingförderer 1 eine Fördervorrichtung 3 genutzt, die statt einer glatten Förderoberfläche eine Förderoberfläche 22 aufweist, die durch Tragabschnitte 14 - 16 zwischen Durchbrechungen 17 der Fördervorrichtung 3 gebildet ist. Eine entsprechende Gestaltung der Förderoberfläche wird im Ausführungsbeispiel dadurch erreicht, dass die Fördervorrichtung aus einem Tragkörper 3, der beispielsweise die Form einer Schiene 37 aufweist, und einem daran befestigten Gitter 10 gebildet ist. Wie in den vergrößerten Ausschnitten 11 - 13 dargestellt ist, wird das Gitter im Ausführungsbeispiel durch ein Drahtgeflecht gebildet. Die Tragabschnitte 14 werden durch die einzelnen Drähte gebildet und die Durchbrechungen 17 entsprechen den Maschen des Drahtgeflechts. Hierbei wird ein grobmaschiges Drahtgeflecht genutzt, so dass die Abmessungen der Durchbrechungen 17 vorzugsweise größer sind als die Drahtdurchmesser der Drähte. Die Durchbrechungen können wenigstens 0,5 mm, vorzugsweise mehrere Millimeter, groß sein. Hierdurch kann erreicht werden, dass auch hochviskose Flüssigkeiten, beispielsweise Öl, durch die Durchbrechungen hindurchtreten können, wodurch eine Bildung von Flüssigkeitsfilmen auf der Förderoberfläche verhindert oder zumindest verringert wird, ohne dass es erforderlich ist, ein saugfähiges Material zu nutzen, das die Flüssigkeit aufsaugen kann.

Wie insbesondere in Fig. 2 zu erkennen ist, ist das Gitter 10 derart gebogen, dass es einen oberhalb des Schienenbodens 23 verlaufenden Bodenabschnitt 18, gewinkelt hierzu verlaufende Wandabschnitte 19 und wiederum hierzu gewinkelte Auflageabschnitte 20 umfasst. Die Auflageabschnitte 20 liegen jeweils auf einer Auflagefläche 40 des Tragkörpers 9 auf. Durch diese Ausgestaltung des Gitters 10 wird erreicht, dass der Bodenabschnitt 18 des Gitters oberhalb des Schienenbodens 23 gehaltert wird, wodurch der Abstand 21 resultiert, durch den Flüssigkeit abgeführt werden kann bzw. in dem Flüssigkeit gesammelt werden kann, ohne den Transport der Objekte 8 zu behindern. Durch die Bedeckung der Seitenwände durch das Gitter 10 wird zudem erreicht, dass sich auch an den Seitenwänden der Schwingschiene keine Fluidfilme bilden können, die den Transport der Objekte 8 behindern könnten. Die Auflageabschnitte können dazu genutzt werden, das Gitter 10 an dem Tragkörper 9 zu befestigen, beispielsweise zu verschrauben, zu verkleben oder zu verschweißen.

Das Gitter 10 und vorzugsweise auch der Tragkörper 9 sind aus einem flüssigkeitsabweisenden Material gebildet. Beispielsweise kann Kunststoff oder Metall, vorzugsweise Edelstahl, als Material verwendet werden.

In Fig. 1 erstreckt sich das Gitter 10 aus Übersichtlichkeitsgründen nicht über die gesamte Länge des Tragkörpers 9. In einer realen Umsetzung würde sich das Gitter jedoch vorzugsweise zumindest über die Länge des tatsächlich genutzten Förderpfades erstrecken und könnte in Längsrichtung der Förderschiene sogar über den Tragkörper 9 hinausstehen.

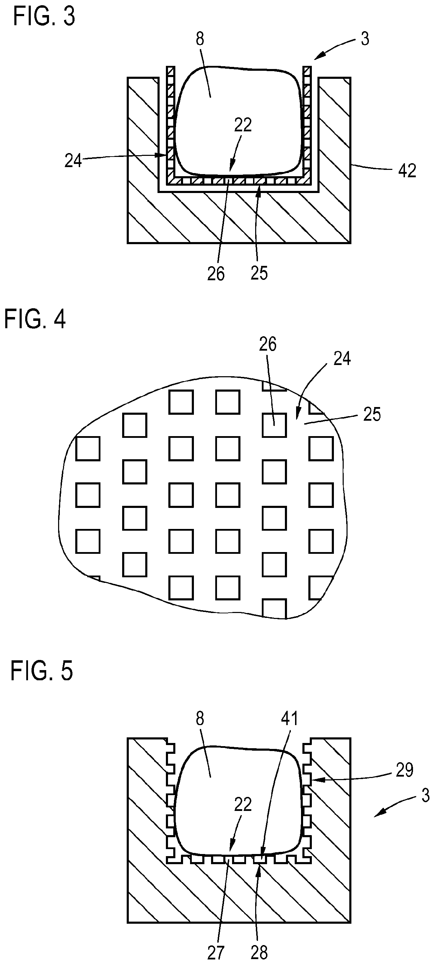

Die Figuren 3 und 4 zeigen eine alternative Ausgestaltung der Fördervorrichtung 3. Die Fördervorrichtung 3 ist in diesem Ausführungsbeispiel vollständig durch das Lochblech 24 gebildet, das, wie insbesondere in der Detailansicht in Fig. 4 zu erkennen ist, Tragabschnitte 25 mit dazwischenliegenden Durchbrechungen 26 ausbildet. Auch in diesem Fall kann insbesondere von den Objekten 8 abgeschiedene Flüssigkeit über die Durchbrechungen 26 abgeführt werden. Um eine Verunreinigung des Arbeitsbereichs des Schwingförderers zu vermeiden, kann ein Auffangbehälter 42, beispielsweise eine Wanne oder eine Schiene, vorgesehen sein, um aus der Fördervorrichtung 3 austretende Flüssigkeit aufzufangen. Die Fördervorrichtung 3 ist insbesondere bezüglich des Auffangbehälters 42 beweglich, wobei der Auffangbehälter 42 beispielsweise ein Gegengewicht bilden kann, das bezüglich zur Basis 5 zu der Fördervorrichtung 3 entgegengesetzt schwingt. Alternativ kann der Auffangbehälter 42 ortsfest bezüglich der Basis 5 angeordnet sein.

Es wäre auch möglich, die mit Bezug zur Fig. 3 und 4 erläuterte, ausschließlich aus einem Gitter gebildete Fördervorrichtung 3 aus dem mit Bezug zur Fig. 1 und 2 diskutierten Drahtgeflecht zu bilden oder des mit Bezug zur Fig. 3 und 4 diskutierte Lochblech 24 statt dem Gitter 10 in dem Schwingförderer gemäß Fig. 1 und 2 zu nutzen.

Statt der in den bisherigen Ausführungsbeispielen diskutierten Bildung der Förderoberfläche 22 durch zwischen Durchbrechungen liegende Tragabschnitte der Fördervorrichtung 3 ist es, wie in Fig. 5 dargestellt ist, auch möglich, die Förderoberfläche 22 dadurch auszubilden, dass die Fördervorrichtung 3 im Bereich ihrer Förderoberfläche 22, insbesondere sowohl am Boden als auch an der Seitenwand, Erhebungen 27 aufweist. Die Erhebungen 27 können beispielsweise in einem ähnlichen Muster angeordnet sein, wie es in Fig. 4 für die Durchbrechungen 26 dargestellt ist. Durch die Erhebungen 27 werden die Objekte 8 von einem Boden 28 bzw. von den Wänden 29 der Fördervorrichtung 3 beabstandet gelagert, wodurch Hohlräume 41 resultieren, über die mit den Objekten 8 in die Fördervorrichtung 3 eingebrachte Flüssigkeit abgeführt werden kann.

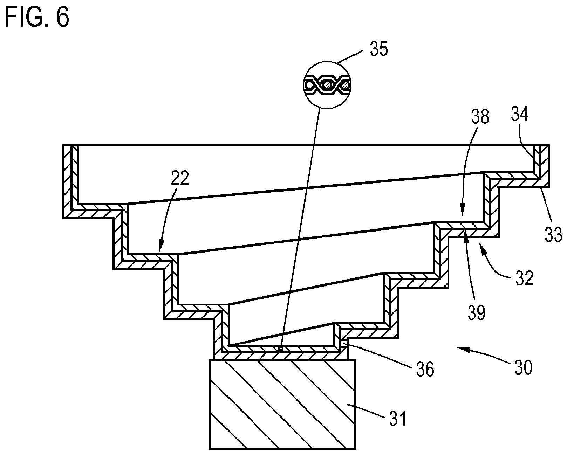

In den bisherigen Ausführungsbeispielen wurden Schwingschienen als Fördervorrichtungen genutzt. Die beschriebene Ausgestaltung der Fördervorrichtungen, die einen Abfluss von Flüssigkeiten von einer Förderoberfläche ermöglicht, kann jedoch auch auf andere Schwingförderer, beispielsweise Wendelförderer, übertragen werden. Ein Beispiel hierfür ist schematisch in Fig. 6 dargestellt. Hierbei wird in dem Schwingförderer 30 eine Fördervorrichtung 32, nämlich ein Fördertopf, durch eine Antriebsvorrichtung 31 zu Rotationsschwingungen angeregt. Entsprechende Wendelförderer sind im Stand der Technik grundsätzlich bekannt, weshalb das Antriebs- und Förderprinzip nicht detailliert dargestellt werden soll. Ähnlich wie zu Fig. 1 und 2 erläutert, besteht die Fördervorrichtung 32 aus einem Tragkörper 33, der die übliche Form eines Fördertopfes aufweist, wobei in diesem ein Gitter 34 eingelegt ist. Wie in dem vergrößerten Ausschnitt 35 zu erkennen ist, ist das Gitter in dem Ausführungsbeispiel ebenso wie in dem zu Fig. 1 und 2 erläuterten Ausführungsbeispiel aus einem Drahtgeflecht gebildet. Ein derartiges Drahtgeflecht ist relativ flexibel und kann daher leicht an eine gewünschte und durch den Tragkörper 33 vorgegebene Form angepasst werden.

Das Gitter 34 liegt im gezeigten Ausführungsbeispiel unmittelbar auf dem Schienenboden 39 der wendelförmig entlang der Außenwand des Fördertopfes verlaufenden Förderschiene 38 auf. Dies kann, wenn ein Drahtgeflecht als Gitter 34 genutzt wird, bereits ausreichen, um ausreichende Hohlräume zum Abführen einer Flüssigkeit bereitzustellen. Beispielsweise kann die Flüssigkeit zu einem Fluidauslass 36 geführt werden. Um den Fluidablauf weiter zu verbessern, wäre es jedoch auch möglich, das Gitter 34 zumindest abschnittsweise von dem Schienenboden 39 zu beabstanden.

Statt einem Drahtgeflecht könnte als Gitter 34 auch ein Lochblech oder Ähnliches genutzt werden, wie dies mit Bezug auf Fig. 3 und 4 erläutert wurde. Ein solches Lochblech kann auf den Tragkörper 33 aufgebracht werden oder direkt in Form der gewünschten Fördervorrichtung gebracht werden, um diese zu bilden, wie dies mit Bezug auf Fig. 3 und 4 erläutert wurde. Auch die mit Bezug auf Fig. 5 erläuterte Nutzung von Vorsprüngen 27 zur Ausbildung von Abflussräumen für Flüssigkeiten kann auf Wendelförderer bzw. Fördertöpfe übertragen werden.

## Patentansprüche

1. Schwingförderer (1, 30) mit einer durch wenigstens eine Antriebsvorrichtung (2, 31) zu einer Schwingung anregbaren Fördervorrichtung (3, 32), wobei durch die Schwingung der Fördervorrichtung (3, 32) durch eine Förderoberfläche (22) der Fördervorrichtung (3, 32) gelagerte Objekte (8) entlang einem Förderpfad förderbar sind, wobei die Förderoberfläche (22) durch voneinander beabstandete Erhebungen (27) der Fördervorrichtung (3) und/oder durch Tragabschnitte (14, 15, 16, 25) zwischen Durchbrechungen (17, 26) der Fördervorrichtung (3, 32) gebildet ist, wobei die Fördervorrichtung (3) ein Gitter (10, 34) ist oder umfasst, das die Förderoberfläche (22) bildet, **dadurch gekennzeichnet, dass** das Gitter (10, 34) einen sich entlang des Förderpfades erstreckenden Bodenabschnitt (18) und wenigstens einen gewinkelt zu dem Bodenabschnitt (18) stehende Wandabschnitt (19) zur Führung der Objekte (8) entlang dem Förderpfad bildet.

2. Schwingförderer nach Anspruch 1, **dadurch gekennzeichnet, dass** das Gitter (10, 34) durch ein grobmaschiges Metallgewebe oder Kunststoffgewebe gebildet ist.

3. Schwingförderer nach Anspruch 1 oder 2, **dadurch gekennzeichnet, dass** die gesamte Fördervorrichtung (3, 32) aus dem Gitter (10, 34) geformt ist, so dass Flüssigkeit bodenseitig und/oder randseitig aus der Fördervorrichtung (3, 32) austreten kann, wobei ein Auffangbehälter (42) vorgesehen ist, bezüglich dem die Fördervorrichtung (3, 32) schwingt, um die abgeführte Flüssigkeit aufzufangen.

4. Schwingförderer nach Anspruch 3, **dadurch gekennzeichnet, dass** der Auffangbehälter (42) durch ein Gegengewicht des Schwingförderers gebildet wird, das entgegen der Fördervorrichtung (3, 32) schwingt.

5. Schwingförderer nach Anspruch 1 oder 2, **dadurch gekennzeichnet, dass** die Fördervorrichtung (3, 32) einen Tragkörper (9, 33) umfasst, der eine sich entlang des Förderpfades erstreckende Schiene (37, 38) ausbildet, wobei das Gitter (10, 34) an dem Tragkörper (9, 33) befestigt ist und sich entlang oder oberhalb eines Schienenbodens (23, 39) der Schiene (37, 38) erstreckt.

6. Schwingförderer nach Anspruch 5, **dadurch gekennzeichnet, dass** an der der von dem Bodenabschnitt (18) abgewandten Seite des Wandabschnitts (19) ein gewinkelt zu dem Wandabschnitt (19) verlaufender Auflageabschnitt (20) angeordnet ist, der auf einer Auflagefläche (40) des Tragkörpers (9, 33) aufliegt.

7. Schwingförderer nach einem der vorangehenden Ansprüche, **dadurch gekennzeichnet, dass** die Förderoberfläche einen Bodenabschnitt (18) zum Tragen der Objekte (8) und wenigstens einen Wandabschnitt (19) zur Führung der Objekte (8) entlang des Förderpfads umfasst, wobei sowohl der Bodenabschnitt (18) als auch der Wandabschnitt (19) durch die Erhebungen (27) und/oder Tragabschnitte (14, 15, 16, 25) der Fördervorrichtung (3, 32) gebildet ist.

8. Schwingförderer nach einem der vorangehenden Ansprüche, **dadurch gekennzeichnet, dass** die Erhebungen (27) und/oder Tragabschnitte (14, 15, 16, 25) in zumindest eine Richtung wenigstens 0,5 mm voneinander beabstandet sind.

9. Schwingförderer nach einem der vorangehenden Ansprüche, **dadurch gekennzeichnet, dass** die Erhebungen (27) und/oder die Tragabschnitte (14, 15, 16, 25) aus einem flüssigkeitsabweisenden Material gebildet sind.

10. Schwingförderer nach einem der vorangehenden Ansprüche, **dadurch gekennzeichnet, dass** die Fördervorrichtung (3, 32) als Schwingschiene oder als Fördertopf ausgebildet ist.

## Claims

1. Vibratory conveyor (1, 30) having a conveying device (3, 32) that can be excited to vibrate by at least one drive device (2, 31), wherein, as a result of the vibration of the conveying device (3, 32), objects (8) supported by a conveying surface (22) of the conveying device (3, 32) can be conveyed along a conveying path, wherein the conveying surface (22) is formed by mutually spaced elevations (27) of the conveying device (3) and/or by carrying sections (14, 15, 16, 25) between apertures (17, 26) of the conveying device (3, 32), wherein the conveying device (3) is or comprises a grid (10, 34) which forms the conveying surface (22),
**characterized in that** the grid (10, 34) has a floor section (18) extending along the conveying path and at least one wall section (19) angled vertically relative to the floor section (18) for guiding the objects (8) along the conveying path.

2. Vibratory conveyor according to Claim 1, **characterized in that** the grid (10, 34) is formed by a coarse-meshed metal fabric or plastic fabric.

3. Vibratory conveyor according to Claim 1 or 2, **characterized in that** the entire conveying device (3, 32) is formed from the grid (10, 34), so that liquid can emerge from the conveying device (3, 32) at the bottom and/or at the edge, wherein a collecting container (42), with respect to which the conveying device (3, 32) vibrates, is provided in order to collect the liquid discharged.

4. Vibratory conveyor according to Claim 3, **characterized in that** the collecting container (42) is formed by a counterweight of the vibratory conveyor, which vibrates counter to the conveying device (3, 32).

5. Vibratory conveyor according to Claim 1 or 2, **characterized in that** the conveying device (3, 32) comprises a supporting body (9, 33), which forms a rail (37, 38) extending along the conveying path, wherein the grid (10, 34) is fixed to the supporting body (9, 33) and extends along or above a rail base (23, 39) of the rail (37, 38).

6. Vibratory conveyor according to Claim 5, **characterized in that** a support section (20) extending at an angle to the wall section (19) is arranged on the side of the wall section (19) that faces away from the floor section (18), and rests on a supporting surface (40) of the supporting body (9, 33).

7. Vibratory conveyor according to one of the preceding claims, **characterized in that** the conveying surface comprises a floor section (18) for carrying the objects (8) and at least one wall section (19) for guiding the objects (8) along the conveying path, wherein both the floor section (18) and the wall section (19) are formed by the elevations (29) and/or carrying sections (14, 15, 16, 25) of the conveying device (3, 32).

8. Vibratory conveyor according to one of the preceding claims, **characterized in that** the elevations (27) and/or carrying sections (14, 15, 16, 25) are spaced apart from one another by at least 0.5 mm in at least one direction.

9. Vibratory conveyor according to one of the preceding claims, **characterized in that** the elevations (27) and/or the carrying sections (14, 15, 16, 25) are formed from a liquid-repellent material.

10. Vibratory conveyor according to one of the preceding claims, **characterized in that** the conveying device (3, 32) is formed as a vibratory rail or as a conveyor bowl.

## Revendications

1. Transporteur vibrant (1, 30) comprenant un dispositif de transport (3, 32) qui peut être excité en vibration par au moins un dispositif d'entraînement (2, 31), des objets (8) supportés par une surface de transport (22) du dispositif de transport (3, 32) pouvant être transportés le long d'un chemin de transport par la vibration du dispositif de transport (3, 32), la surface de transport (22) étant formée par des élévations (27) du dispositif de transport (3) qui sont espacées les unes des autres et/ou par des portions de support (14, 15, 16, 25) situées entre des ouvertures (17, 26) du dispositif de transport (3, 32), le dispositif de transport (3) étant ou comprenant une grille (10, 34) qui forme la surface de transport (22), **caractérisé en ce que** la grille (10, 34) forme une portion de fond (18) qui s'étend le long du chemin de transport et au moins une portion de paroi (19) coudée par rapport à la portion de fond (18) et destinée à guider les objets (8) le long du chemin de transport.

2. Transporteur vibrant selon la revendication 1, **caractérisé en ce que** la grille (10, 34) est formée par un tissu métallique ou un tissu de matière synthétique à grosses mailles.

3. Transporteur vibrant selon la revendication 1 ou 2, **caractérisé en ce que** tout le dispositif de transport (3, 32) est formé à partir de la grille (10, 34) de sorte que du liquide puisse s'échapper du côté fond et/ou du côté bord du dispositif de transport (3, 32), un réservoir de collecte (42) étant prévu par rapport auquel le dispositif de transport (3, 32) vibre afin de collecter le liquide évacué.

4. Transporteur vibrant selon la revendication 3, **caractérisé en ce que** le réservoir de collecte (42) est formé par un contrepoids du transporteur vibrant qui vibre à l'opposé du dispositif de transport (3, 32).

5. Transporteur vibrant selon la revendication 1 ou 2, **caractérisé en ce que** le dispositif de transport (3, 32) comprend un corps de support (9, 33) qui forme une glissière (37, 38) qui s'étend le long du chemin de transport, la grille (10, 34) étant fixée au corps de support (9, 33) et s'étendant le long ou au-dessus d'un fond (23, 39) de la glissière (37, 38).

6. Transporteur vibrant selon la revendication 5, **caractérisé en ce qu'**une portion d'appui (20), qui s'étend angulairement par rapport à la portion de paroi (19) et qui vient en appui sur une surface d'appui (40) du corps de support (9, 33), est disposée sur le côté de la portion de paroi (19) qui est opposé à la portion de fond (18).

7. Transporteur vibrant selon l'une des revendications précédentes, **caractérisé en ce que** la surface de transport comprend une portion de fond (18) destinée à supporter les objets (8) et au moins une portion de paroi (19) destinée à guider les objets (8) le long du chemin de transport, la portion de fond (18) et la portion de paroi (19) étant toutes les deux formées par les élévations (27) et/ou les portions de support (14, 15, 16, 25) du dispositif de transport (3, 32).

8. Transporteur vibrant selon l'une des revendications précédentes, **caractérisé en ce que** les élévations (27) et/ou les portions de support (14, 15, 16, 25) sont espacées d'au moins 0,5 mm les unes des autres dans au moins une direction.

9. Transporteur vibrant selon l'une des revendications précédentes, **caractérisé en ce que** les élévations (27) et/ou les portions de support (14, 15, 16, 25) sont formées à partir d'un matériau de répulsion de liquides.

10. Transporteur vibrant selon l'une des revendications précédentes, **caractérisé en ce que** le dispositif de transport (3, 32) est réalisé sous la forme d'une glissière vibrante ou sous la forme d'un pot de transport.
